# EUROPEAN PATENT APPLICATION

(11) **EP 1 252 948 A1**
(43) Date of publication of application: **30.10.2002**
(21) Application number: 00939141.8
(22) Date of filing: 23.06.2000
(51) Int. Cl.: B21K 1/14, B21J 5/06, F16C 11/06

(54) **METHOD OF MANUFACTURING BALL JOINT HOUSING**

(30) Priority: 29.03.2000 JP 2000091896
(71) Applicant: KABUSHIKI KAISHA SOMIC ISHIKAWA, Sumida-ku, Tokyo 130-0004 (JP); Misawa, Noboru, Hamamatsu-shi, Shizuoka 435-8560 (JP)
(72) Inventor: MISAWA, Noboru, Kabushiki Kaisha Somic Ishikawa, Hamamatsu-shi, Shizuoka 435-8560 (JP); KATO, Hiroshi, Kabushiki Kaisha Somic Ishikawa, Hamamatsu-shi, Shizuka 435-8560 (JP)
(74) Representative: Kemp, Paul Geoffrey
(86) International application number: JP0004129
(87) International publication number: WO01072448

(57) **Abstract**

Pressure is applied to a cylindrical material (41) in the axial direction so as to perform squeezing process by extrusion, thereby narrowing the forward end of the material (41) with respect to the direction in which the pressure is applied. Obtained as a result of extrusion is an intermediate molding (46) having a cylindrical portion (43), a slanted portion (44), which is formed as a continuous, integral body with the cylindrical portion (43) and has a gradually reduced diameter, and a small diameter cylindrical portion (45), which is formed coaxially with the cylindrical portion (43) and has a diameter smaller than that of the cylindrical portion (43). The slanted portion (44) is flattened by applying pressure from the end of the cylindrical portion (43) of the intermediate molding (46) in the axial direction in the state where the outer and inner cylindrical surfaces of the cylindrical portion (43) and the outer cylindrical surface of the small diameter cylindrical portion (45) are restrained. A first housing (11) is formed by forming the cylindrical portion (43), the slanted portion (44) and the small diameter cylindrical portion (45) respectively into a body portion (14), bottom portion 17 and a coupling portion 23. Compared with a case where a housing is forged from a material in the shape of a solid column, a first housing according to the present invention can be formed with a substantially reduced pressure and is more convenient to form. As it is formed by forward extrusion, high precision formation is possible without the need of cutting work.

## Description

### TECHNICAL FIELD

The present invention relates to a method of producing a housing of a ball joint, wherein the housing for containing a slidable ball head portion is formed by forging.

### BACKGROUND OF THE INVENTION

An example of conventional methods of producing a housing of a ball joint is disclosed in Japanese Patent Provisional Publication No. 10-34276, which relates to a method of forging a generally columnar steel material in the shape of a solid column.

To be more specific, the method of producing a ball joint disclosed in Japanese Patent Provisional Publication No. 10-34276 is comprised of steps of containing a generally columnar material in a generally cylindrical die and forming an intermediate molding by pushing an end of the material by using an intermediate forging device while holding the outer cylindrical surface of the material against the inner wall of the die so that the peripheral edge of said end of the material is formed into the same shape as that of an opening part of the housing. Thereafter, the intermediate molding is contained in a generally tube shaped die of a finish forging device. The middle part of the pushed end of the intermediate molding is pushed by the front end of a punch pin, which is formed in a generally columnar shape corresponding to the inner chamber of the housing of the finished product to shape the end of the intermediate molding. Then, finish forging is performed while the inner cylindrical surface of the inner chamber and the outer cylindrical surface of the housing are held between the punch pin and the inner cylindrical surface of the die.

As the height of the housing and the dimensions of the opening portion of the housing of a ball joint have an influence on the pulling strength of the ball stud and the rocking angle of the stud portion integrally formed with and projecting from the ball head portion of the ball joint, which is slidably contained in the inner chamber of the housing, high dimensional precision is required.

When a housing is forged, a material having a volume slightly greater than the volume of the finished housing is used in order to prevent characteristics loss due to underfill.

Therefore, according to a conventional method of producing a housing of a ball joint that calls for forming a housing by forging a material in the shape of a solid column, in other words such as the one disclosed in Japanese Patent Provisional Publication No. 10-34276, finish forging is performed while restraining the inner cylindrical surface of the inner chamber and the outer cylindrical surface of the housing immobile. As a result, there is the possibility of the surplus material equivalent to the excess volume being pushed rearward during the forging process and piling up on the opening portion of the housing, which portion is not subjected to restraining during the forging process. A pad of surplus material on the opening portion may cause a variance in the dimensions of the opening portion, which dimensions have an influence on the rocking angle of the stud portion of the ball stud and the pulling strength of the ball stud. Therefore, in order to achieve high dimensional precision, cutting work is required to form an opening portion.

Furthermore, as the forging process involves rearward extrusion of the material having a column-like shape, it requires great pressure, which necessitates a large pressure device.

In order to solve the above problem, an object of the present invention is to provide a method of producing a housing of a ball joint which enables the easy production of a housing with high dimensional precision and therefore improves its manufacturability.

### DISCLOSURE OF THE INVENTION

A method of producing a housing of a ball joint according to the present invention is a method of producing a ball joint housing which has a body portion having a cylindrical shape, a bottom portion that closes off an end of the body portion, a coupling portion formed on the bottom face of the bottom portion and projecting therefrom in the direction facing away from the body portion, and an inner chamber for containing the ball head portion of the ball joint with a bearing seat disposed between the inner chamber and the ball head portion so that the ball head portion can easily slide on the bearing seat, wherein said coupling portion is formed by narrowing the portion near one of the two axial ends of a cylindrical material by forging. According to the method described above, the end opposite the end that undergoes the narrowing process can easily be restrained without the need of great pressure or cutting work of a surplus material, and a housing having precise dimensions and stable characteristics can easily be formed.

According to another feature of the invention, the method of producing a housing of a ball joint calls for narrowing the portion near one of the two axial ends of the material while restraining the other axial end of the material so as to maintain the shape of the body portion. As this feature makes the depth of the body portion uniform, a housing having precise dimensions and stable characteristics can easily be formed.

According to yet another feature of the invention, the method of producing a housing of a ball joint calls for narrowing the portion which is near one of the two axial ends of the material and at a given distance from the other axial end of the material, while restraining the other axial end of the material so as to prevent the surplus material from running out. As this feature makes the depth of the body portion uniform, a housing having precise dimensions and stable characteristics can easily be formed.

A method of producing a housing of a ball joint according to yet another feature of the invention is a method of producing a ball joint housing which has a body portion having a cylindrical shape, a bottom portion that closes off an end of the body portion, a coupling portion formed on the bottom face of the bottom portion and projecting therefrom in the direction facing away from the body portion, and an inner chamber for containing the ball head portion of the ball joint with a bearing seat disposed between the inner chamber and the ball head portion so that the ball head portion can easily slide on the bearing seat, wherein an intermediate molding having a cylindrical portion in the shape of a cylinder, a slanted portion, which is located at one of the axial ends of the cylindrical portion and has a gradually reduced diameter, and a small diameter cylindrical portion which is formed coaxially with the cylindrical portion and has a diameter smaller than that of the cylindrical portion is formed by narrowing the portion near one of the two axial ends of a cylindrical material by forging, and wherein said body portion, bottom portion and coupling portion are respectively formed from the cylindrical portion, the slanted portion and the small diameter cylindrical portion by forging said intermediate molding in the state where the outer and inner cylindrical surfaces of the cylindrical portion of the intermediate molding, the surface of the other end of the cylindrical portion, i.e. the end opposite the end where the slanted portion is located, and the outer cylindrical surface of the small diameter cylindrical portion are restrained. The method described above enables the easy and reliable formation of a housing having precise dimensions and stable characteristics without the need of great pressure or cutting work of a surplus material.

According to yet another feature of the invention, the method of producing a housing of a ball joint calls for applying pressure to the material in the axial direction so as to perform extrusion to reduce the diameter of the forward end of the material with respect to the direction in which the pressure is applied. By the method described above, the depth of the body portion can easily be controlled, and a housing having precise dimensions and stable characteristics can easily and reliably be formed.

A method of producing a housing of a ball joint according to yet another feature of the invention is a method of producing a ball joint housing which has a body portion having a cylindrical shape, a bottom portion that closes off an end of the body portion, a coupling portion formed on the bottom face of the bottom portion and projecting therefrom in the direction facing away from the body portion, and an inner chamber for containing the ball head portion of the ball joint with a bearing seat disposed between the inner chamber and the ball head portion so that the ball head portion can easily slide on the bearing seat, wherein an intermediate molding has a cylindrical portion in the shape of a cylinder, a slanted portion, which is located at one of the axial ends of the cylindrical portion and has a gradually reduced diameter, and a small diameter cylindrical portion which is formed coaxially with the cylindrical portion and has a diameter smaller than that of the cylindrical portion; said intermediate molding is formed by using a processing machine having a die, an inner punch and an outer punch; the inner surface of said die is formed into a cylindrical hole, a tapered surface that extends from the bottom of the cylindrical hole as an integral body therewith and is angled downward so that its diameter is gradually reduced, and a smaller cylindrical hole which integrally extends from the lower end of the tapered surface in such a manner as to be coaxial with the cylindrical hole and has a diameter smaller than that of the cylindrical hole; said inner punch is adapted to be inserted into or removed from the interior of said die and provided with a cylindrical shaft whose outer diameter is smaller than the diameter of said cylindrical hole, a slanted surface portion whose outer surface integrally extends from the lower end of the cylindrical shaft and gradually narrows downward, and a smaller cylindrical shaft which is coaxial with the aforementioned cylindrical shaft and has a diameter smaller than that of the cylindrical shaft; said outer punch is adapted to be fitted into said cylindrical hole and snugly contain the cylindrical shaft of the inner punch; formation of the intermediate molding is comprised of steps of snugly inserting a cylindrical material into said cylindrical hole of the die, snugly inserting the inner punch into the material fitted in the cylindrical hole of the die until the inner punch reaches the location at which the outer cylindrical surface of said slanted surface portion faces the tapered surface while the outer cylindrical surface of the smaller cylindrical shaft faces the smaller cylindrical hole so that the outer and inner cylindrical surfaces of said material are restrained by the die and the inner punch, and snugly inserting said outer punch into the cylindrical hole of the die that restrains the material, thereby applying pressure to the material in the axial direction so that the diameter of the forward end of the material with respect to the direction in which the pressure is applied is reduced by extruding said forward end portion from between the slanted surface portion and the tapered surface into the space between the smaller cylindrical shaft and the cylindrical hole; and said housing is formed by forging the intermediate molding formed as above. The method described above enables the easy and reliable formation of a housing having precise dimensions and stable characteristics without the need of great pressure or cutting work of a surplus material.

According to yet another feature of the invention, the processing machine has a molding apparatus that includes a lower die, a push-punch and a cylindrical pressure-punch, said lower die provided with a cylindrical coupling hole having an inner diameter corresponding to the outer diameter of the coupling portion and a cylindrical body hole which extends from the upper rim of the cylindrical coupling hole integrally and concentrically with the cylindrical coupling hole, with a step portion formed between the cylindrical body hole and the cylindrical coupling hole, and has an inner diameter greater than the diameter of the cylindrical coupling hole and corresponding to the outer diameter of said body portion, said push-punch having an outer diameter corresponding to the inner diameter of the body portion and the forward end of the push-punch corresponding to the upper surface of the bottom portion, said pressure-punch adapted to be fitted into the cylindrical body hole and snugly contain the push-punch; and said body portion, bottom portion and coupling portion are respectively formed from the aforementioned cylindrical portion, slanted portion and small diameter cylindrical portion by following a procedure of inserting the small diameter cylindrical portion of the intermediate molding into the cylindrical coupling hole of the lower die while inserting the cylindrical portion into the cylindrical body hole so as to fit the intermediate molding in the lower die, snugly inserting said push-punch into the cylindrical portion of the intermediate molding fitted in the lower die, thereby pushing the slanted portion of the intermediate molding against the step portion, and pushing the upper rim of said cylindrical portion by means of the pressure-punch. The method described above enables the easy and reliable formation of a housing having precise dimensions and stable characteristics.

The method of producing a housing of a ball joint according to yet another feature of the invention is characterized in that the outer diameter and the inner diameter of the material are nearly the same as the respective outer diameter and inner diameter of the body portion. Therefore, a housing can easily be formed merely by narrowing an end of the material while restraining flow of the material at the other end. The method according to the invention is thus capable of improving manufacturability of the housing.

According to yet another feature of the invention, the method of producing a housing of a ball joint calls for providing either the bottom portion or the coupling portion with an air hole that extends from the center to the outer cylindrical surface of the housing. As the housing is formed from a material having a cylindrical air hole, the coupling portion, too, is formed in a cylindrical shape, and the interior of the coupling portion communicates with the exterior of the bottom portion or the coupling portion via the air hole. In other words, by merely providing an air hole, the interior of a member intended to be coupled with the coupling portion by screw engagement or other appropriate means communicates with the outside of the housing via the interior of the coupling portion and the air hole so that the number of processing steps necessary for achieving the communication is reduced. Thus, the invention improves manufacturability of the housing.

### BRIEF DESCRIPTION OF THE DRAWINGS

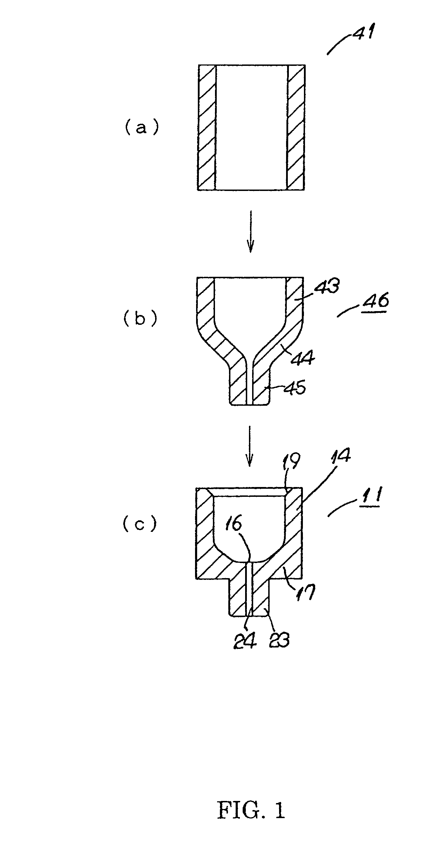

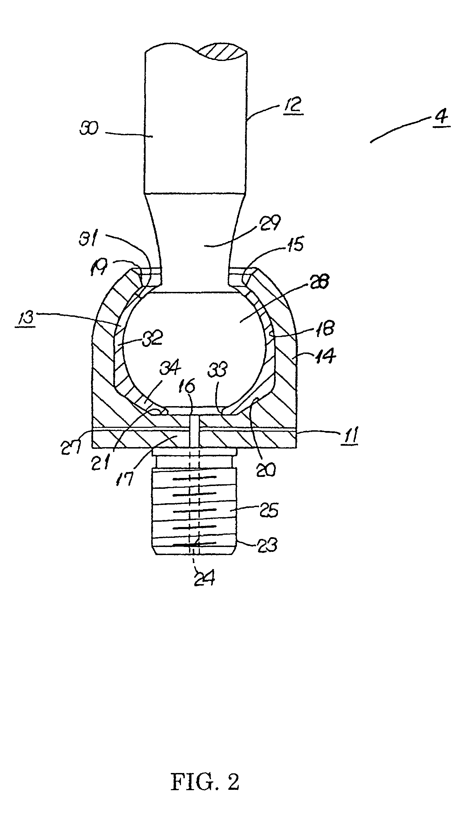

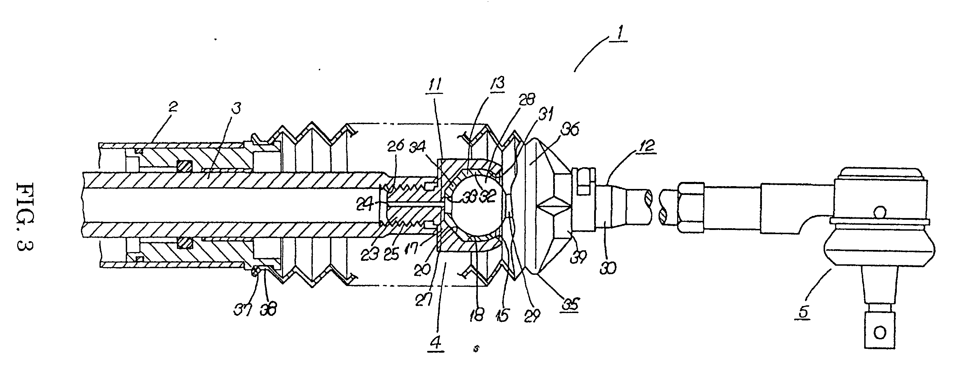

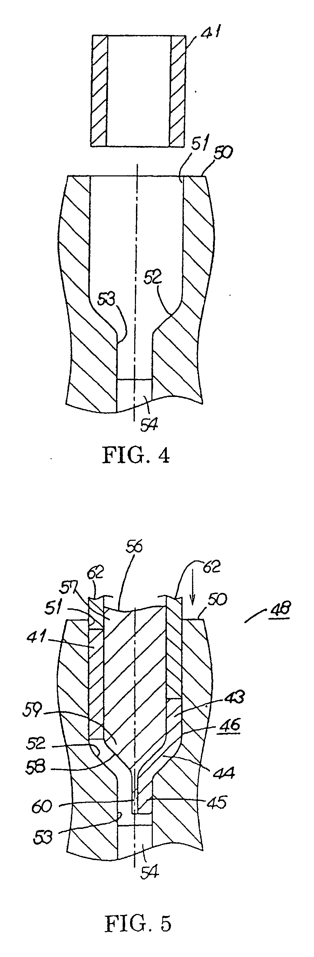

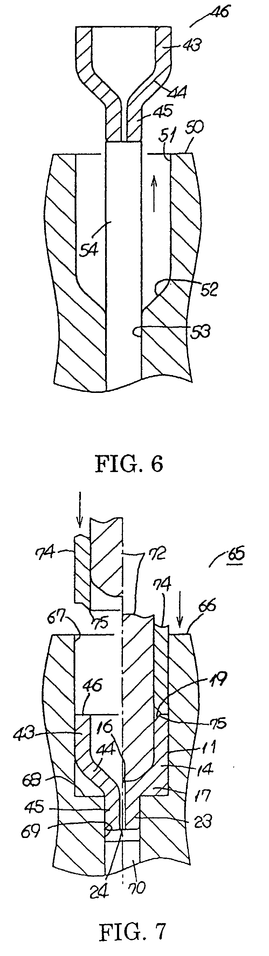

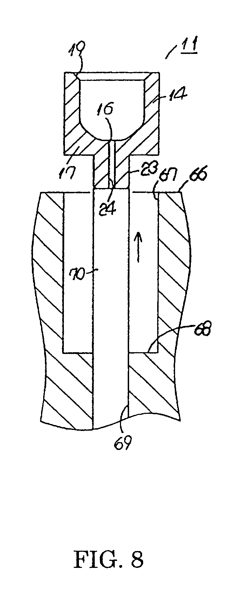

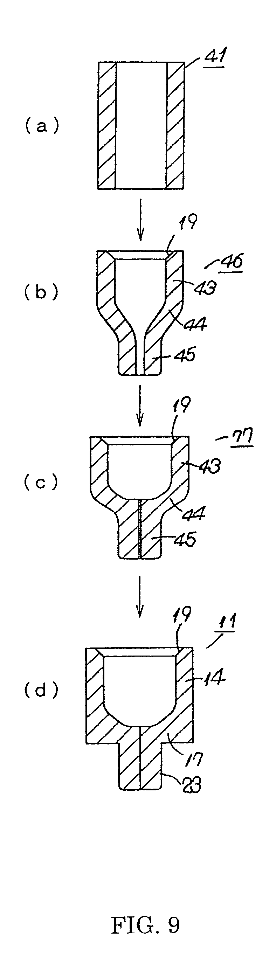

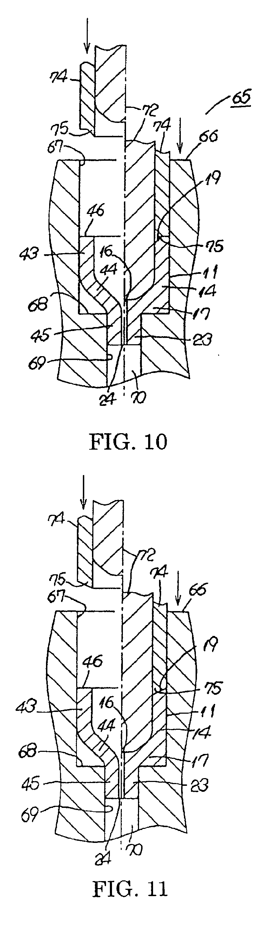

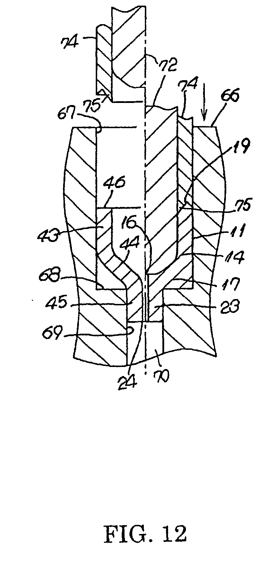

Fig. 1 is a schematic illustration to explain a method of producing the housing of a ball joint according to an embodiment of the present invention and illustrates the process of forming a first housing by forging, wherein (a), (b) and (c) respectively represent a sectional view of a material, a sectional view of an intermediate molding and a sectional view of the first housing having a coupling portion which does not have an external threaded portion; Fig. 2 is a partially cutaway side view of a first ball joint according to said method; Fig. 3 is a partially cutaway side view of the main body of a rack-and-pinion steering system according to said method; Fig. 4 is a schematic illustration to explain how the material is set in a first die when an intermediate molding is forged by means of a first extruder according to said method; Fig. 5 is a schematic illustration to explain how the intermediate molding is forged by means of said first extruder; Fig. 6 is a schematic illustration to explain how the intermediate molding formed by means of said first extruder is removed from the die; Fig. 7 is a schematic illustration to explain how an intermediate molding is forged when the first housing is forged by means of a second extruder according to said method; Fig. 8 is a schematic illustration to explain how the first housing formed by means of said second extruder is removed from the die; Fig. 9 is a schematic illustration to explain a method of producing the housing of a ball joint according to another embodiment of the present invention and illustrates the process of forming a first housing by forging, wherein (a), (b) (c) and (d) respectively represent a sectional view of a material, a sectional view of an intermediate molding, a sectional view of a second intermediate molding and a sectional view of the first housing having a coupling portion which does not have an external threaded portion; Fig. 10 is a schematic illustration to explain a method of producing the housing of a ball joint according to yet another embodiment of the present invention and illustrates how an intermediate molding is forged when the first housing is forged by means of a second extruder; Fig. 11 is a schematic illustration to explain a method of producing the housing of a ball joint according to yet another embodiment of the present invention and illustrates how an intermediate molding is forged when the first housing is forged by means of a second extruder; and Fig. 12 is a schematic illustration to explain a method of producing the housing of a ball joint according to yet another embodiment of the present invention and illustrates how an intermediate molding is forged when the first housing is forged by means of a second extruder.

### PREFERRED EMBODIMENT OF THE INVENTION

Next, the structure of a ball joint according to an embodiment of the present invention is explained hereunder, referring to relevant drawings.

Referring to Fig. 3, numeral 1 denotes the main body of a rack-and-pinion steering system which may constitute, for example, the steering mechanism of an automobile. The rack-and-pinion steering system main body 1 has a first ball joint 4, which is a rack-end ball joint attached to the end of a generally bar-shaped rack bar 3 connected to a gear box 2. The rack-and-pinion steering system main body 1 also includes a second ball joint 5, which is a tie-rod-end ball joint attached to the end of the first ball joint 4.

As shown in Figs. 2 and 3, the first ball joint 4 comprises a generally cylindrical first housing 11 formed of metal by forging, a first ball stud 12 made of metal, and a first bearing seat 13 made of synthetic resin.

The first housing 11 has a cylindrical body portion 14 having an opening 15 at one of the two opposing ends and a round, generally brim-shaped bottom portion 17 at the other end so that the other end is nearly entirely closed off by the bottom portion 17, except for a through hole 16 formed at the center of the bottom portion 17. The interior of the first housing 11 is formed into an inner chamber 18 which has a generally cylindrical shape with a bottom. A slanted rocking surface 19 that flares outward is formed along the inner rim of the opening 15 of the body portion 14. The upper surface of the bottom portion 17 of the first housing 11 is formed into a slanted receiving surface 20 and a brim receiving surface 21. The slanted receiving surface 20 extends from the bottom rim of the body portion 14 and slants downward like an inverse cone. The brim receiving surface 21 extends from the bottom edge of the slanted receiving surface 20 as an integral body therewith at an angle nearly perpendicular to the axis of the first housing 11, and the aforementioned through hole 16 is located at the center of the brim receiving surface 21.

A cylindrical coupling portion 23 projects downward from the bottom portion 17 of the first housing 11 and extends coaxially with respect to the body portion 14. The coupling portion 23 has a communicating hole 24 that communicates with the through hole 16 of the bottom portion 17. An external threaded portion 25 is formed on the outer cylindrical surface of the coupling portion 23. With the external threaded portion 25 of the coupling portion 23 screwed in an internal threaded portion 26 formed inside the end portion of the rack bar 3, the first housing 11 is integrally joined to the rack bar 3.

The bottom portion 17 of the first housing 11 is provided with an air hole 27 that extends through the bottom portion 17 in the radial direction and communicates with the communicating hole 24.

The first ball stud 12 is provided at one of its end with a generally spherical first ball head portion 28. A first stud portion 30 is integrally formed with the first ball head portion 28, with a small diameter portion 29 therebetween. A first threaded portion, which is an external thread not shown in the drawings, is formed at the front end of the first stud portion 30, i.e. the end opposite the base end at which the small diameter portion 29 is formed.

The first bearing seat 13, which has a generally cylindrical shape with a bottom, is formed of a hard synthetic resin, such as polyacetal resin, that has good bearing characteristics and a great ability to withstand load, as well as sufficient rigidity and elasticity. The first bearing seat 13 has a cylindrical body portion 32 having a cylindrical shape. An insertion hole 31 adapted to receive and contain the first ball head portion 28 of the first ball stud 12 is formed at an end of the cylindrical body portion 32. A bottom face portion 34 having a hole 33 that has a diameter smaller than the diameter of the first ball head portion 28 is formed at the other end of the cylindrical body portion 32. The first bearing seat 13 is contained in the inner chamber 18 of the first housing 11 in the state where the bottom face portion 34 is in contact with the slanted receiving surface 20 and the brim receiving surface 21 of the bottom portion 17 of the first housing 11. The first ball head portion 28 of the first ball stud 12 is slidably contained in the first bearing seat 13, and the portion where the opening 15 of the first housing 11 is located is crimped inward so as to reduce its diameter. Thus, the first ball joint 4 is formed.

A rack boot 35 serving as a cover member is attached to the rack-and-pinion steering system main body 1. The rack boot 35 is made of rubber or synthetic resin, e.g. synthetic resin of various types, such as polyamide, polyurethane, polyester, polyvinyl chloride, or polyolefine, and has an accordion-like cylindrical tubular portion 36. The tubular portion 36 is provided at one end thereof with a ringshaped first fitting portion 38 adapted to be fitted and held in a catching groove 37, which is in the shape of a groove formed around the outer surface of the gear box 2 in such a manner as to extend in the circumferential direction. A second fitting portion 39 is formed at the other end of tubular portion 36. The second fitting portion 39 is adapted to be fitted and held in a groove (not shown), which is in the shape of a groove formed around the first stud portion 30 of the first ball stud 12. The rack boot 35 is attached so as to cover the rack bar 3 and the first ball joint 4.

Next, the process of producing the first housing 11 of the first ball joint 4 of the embodiment described above is explained hereunder, referring to the relevant drawings.

First of all, as shown in Fig. 1 (a), the material used for this production process is a cylindrical material 41 having an outer diameter and an inner diameter that are nearly identical respectively to the intended outer diameter and inner diameter of the body portion 14 of the first housing 11 and a given length that makes the volume of the material 41 the same as the volume of the first housing 11.

As shown in Fig. 1 (b), the material 41 undergoes squeezing which is conducted by reducing the diameter of the portion near one of the two axial ends, i.e. the lower end, of the material 41 by extrusion or other manner of forging. As a result of the squeezing, an intermediate molding 46 which has a cylindrical portion 43, a slanted portion 44 and a small diameter cylindrical portion 45 is produced from the material 41. The aforementioned slanted portion 44 has a gradually reduced diameter and formed at one of the two axial ends of the cylindrical portion 43. The small diameter cylindrical portion 45 is formed at the outer end of the slanted portion 44 coaxially with the cylindrical portion 43 and has a diameter smaller than that of the cylindrical portion 43.

A first extruder 48 shown in Figs. 4 through 6 is used as the processing machine for forging the intermediate molding 46. The first extruder 48 has a first die 50 that serves as a lower die. The first die 50 has a cylindrical hole 51 which has an inner diameter nearly the same as the outer diameter of the material 41, in other words nearly the same as_the outer diameter of the body portion 14 of the first housing 11, and is formed so that its axis extends in the vertical direction. The first die 50 includes a tapered surface 52 that extends from the bottom of the cylindrical hole 51 as an integral body therewith and is angled downward so that the interior of the first die 50 gradually narrows downward. Also formed in the first die 50 is a smaller cylindrical hole 53 which integrally extends from the bottom edge of the tapered surface 52. The smaller cylindrical hole 53 is coaxial with the cylindrical hole 51 and has a diameter which is smaller than that of the cylindrical hole 51 and nearly the same as the outer diameter of the coupling portion 23 that is in the state prior to formation of the external threaded portion 25. The first die 50 is also provided with a first knockout pin 54 in the shape of a solid column, which is disposed in the smaller cylindrical hole 53 in such a manner as to be capable of sliding up and down. The part where the cylindrical hole 51 and the tapered surface 52 of the first die 50 are integrally joined is in the shape of a concave arc, and the part where the tapered surface 52 and the smaller cylindrical hole 53 are integrally joined is in the shape of a convex arc.

The first extruder 48 also has a bar-shaped first inner punch 56 which can be inserted into or removed from the interior of the first die 50. The first inner punch 56 has a cylindrical shaft 57 whose outer diameter is smaller than the cylindrical hole 51 and nearly the same as the inner diameter of the material 41, in other words nearly the same as the inner diameter of the body portion 14 of the first housing 11. The first inner punch 56 includes a slanted surface portion 59 having a slanted surface 58 that extends from the bottom edge of the outer surface of the cylindrical shaft 57 as an integral body therewith and is angled downward so that the slanted surface portion 59 gradually narrows downward. The first inner punch 56 is also provided with a smaller cylindrical shaft 60 which is coaxial with the cylindrical shaft 57 with a diameter smaller than that of the cylindrical shaft 57 and formed in such a manner that the outer surface of the smaller cylindrical shaft 60 integrally extends from the bottom edge of the slanted surface 58 of the slanted surface portion 59. The part where the cylindrical shaft 57 and the slanted surface portion 59 of the first inner punch 56 are integrally joined is in the shape of a convex arc corresponding to the first die 50, and the part where the slanted surface portion 59 and the smaller cylindrical shaft 60 are integrally joined is in the shape of a concave arc corresponding to the first die 50.

The first extruder 48 is also provided with a first outer punch 62 which can be fitted into the cylindrical hole 51 of the first die 50 and is able to snugly contain the first inner punch 56. The first outer punch 62 is formed in a cylindrical shape having an outer diameter nearly the same as the inner diameter of the cylindrical hole 51 of the first die 50 and an inner diameter nearly the same as the outer diameter of the cylindrical shaft 57 of the first inner punch 56.

When forming an intermediate molding 46 from the material 41, the material 41 is inserted into the cylindrical hole 51 of the first die 50 as shown in Fig. 4. In that state, as the outer diameter of the material 41 is nearly the same as the diameter of the cylindrical hole 51, the outer rim of the bottom of the material 41 is stopped at the border between the cylindrical hole 51 of the first die 50 and the tapered surface 52 that narrows downward.

Thereafter, as shown in Fig. 5, the first inner punch 56 is snugly inserted into the material 41 fitted in the cylindrical hole 51 of the first die 50 until the first inner punch 56 reaches a given location at which the outer cylindrical surface of the cylindrical shaft of the first inner punch 56 faces the inner surface of the cylindrical hole 51 of the first die 50; the slanted surface 58 of the slanted surface portion 59 of the first inner punch 56 faces the tapered surface 52 of the first die 50; and at which the outer cylindrical surface of the smaller cylindrical shaft 60 of the first inner punch 56 faces the inner surface of the smaller cylindrical hole 53 of the first die 50.

Next, the first outer punch 62 containing the first inner punch 56 therein is lowered and fitted into the cylindrical hole 51 of the first die 50, in other words the first outer punch 62 is snugly inserted between the cylindrical hole 51 of the first die 50 and the first inner punch 56, so that the material 41 is extruded downward. As a result of the extrusion, the material 41 between the cylindrical hole 51 of the first die 50 and the first inner punch 56 is pushed downward so that the surplus material at the lower part of the material 41 is forced to move downward from the space between the slanted surface 58 of the slanted surface portion 59 of the first inner punch 56 and the tapered surface 52 of the first die 50 into the space between the outer cylindrical surface of the smaller cylindrical shaft 60 of the first inner punch 56 and the inner surface of the smaller cylindrical hole 53 of the first die 50 while being restrained by these surfaces. With its bottom portion thus being narrowed by squeezing, the material 41 is formed into the intermediate molding 46.

In other words, the intermediate molding 46 shown in Fig. 1 (b) is formed with the portion between the cylindrical hole 51 of the first die 50 and the cylindrical shaft 57 of the first inner punch 56 being formed into the aforementioned cylindrical portion 43, the portion between the slanted surface portion 59 of the first inner punch 56 and the tapered surface 52 of the first die 50 into the slanted portion 44, and the portion between the smaller cylindrical shaft 60 of the first inner punch 56 and the smaller cylindrical hole 53 of the first die 50 into the small diameter cylindrical portion 45.

After the intermediate molding 46 is formed by applying pressure to the material 41 by lowering the first outer punch 62 by a specified distance or until a given load is applied, the intermediate molding 46 may be removed from the first extruder 48 by following a procedure of removing the first inner punch 56 from the intermediate molding 46 by moving the first inner punch 56 upward without moving the first outer punch 62, the downward movement of which has been stopped beforehand to terminate application of pressure; moving the first outer punch 62 upward to remove it from the cylindrical hole 51 of the first die 50; and, as shown in Fig. 6, moving the first knockout pin 54 upward so as to push the intermediate molding 46 out of the first die 50.

Next, the intermediate molding 46 formed as above is restrained at the outer and inner cylindrical surfaces of the cylindrical portion 43 and the end opposite the slanted portion 44, i.e. the upper end of the cylindrical portion 43, and also at the outer cylindrical surface of the small diameter cylindrical portion 45. Then, the slanted portion 44 is bent further inward as shown in Fig. 1 (c) by extrusion or by other method of forging. Thus, formation of the first housing is completed.

The processing machine for forming the first housing 11 from the intermediate molding 46 consists of the first extruder 48 described above and a second extruder 65, which is a molding apparatus shown in Figs. 7 and 8. The second extruder 65 has a second die 66 that serves as a lower die. The second die 66 has a cylindrical body hole 67 which has an inner diameter nearly the same as the outer diameter of the cylindrical portion 43 of the intermediate molding 46, in other words nearly the same as the outer diameter of the body portion 14 of the first housing 11, and is formed such that its axis extends in the vertical direction. The bottom of the cylindrical body hole 67 is formed into a step portion 68, at the approximate center of which a cylindrical coupling hole 69 having a diameter smaller than that of the cylindrical body hole 67 so that the interior of the cylindrical body hole 67 integrally communicates with the cylindrical coupling hole 69, with the step portion 68 joining them so that the cylindrical body hole 67, the step portion 68 and the cylindrical coupling hole 69 together form a step-like shape. The inner diameter of the cylindrical coupling hole 69 is nearly the same as the outer diameter of the small diameter cylindrical portion 45 of the intermediate molding 46. In other words, the cylindrical coupling hole 69 has an inner diameter corresponding to the outer diameter of the coupling portion 23 that is in the state prior to formation of the external threaded portion 25. The second die 66 is also provided with a second knockout pin 70 in the shape of a solid column, which is disposed in the cylindrical coupling hole 69 in such a manner as to be capable of sliding up and down. The cylindrical body hole 67 and step portion 68 of the second die 66 are integrally and continuously joined at nearly a right angle, while the step portion 68 and the cylindrical coupling hole 69, too, are integrally and continuously joined at nearly a right angle.

The second extruder 65 also has a second inner punch 72 which is a bar-shaped push-punch adapted to removably be inserted into the interior of the second die 66. The second inner punch 72 is so formed as to have an outer diameter smaller than the cylindrical body hole 67 and nearly the same as the inner diameter of the cylindrical portion 43 of the intermediate molding 46, in other words nearly the same as_the inner diameter of the body portion 14 of the first housing 11. The end of the second inner punch 72, i.e. the bottom, is formed into the shape of a truncated cone corresponding to the slanted receiving surface 20, which gradually narrows downward, and the brim receiving surface 21, which, together with the slanted receiving surface 20, constitutes the upper surface of the bottom portion 17 of the first housing 11.

The second extruder 65 is also provided with a second outer punch 74 as a pressure-punch. The second outer punch 74 is formed in a cylindrical shape having an outer diameter nearly the same as the inner diameter of the cylindrical body hole 67 of the second die 66 and an inner diameter nearly the same as the outer diameter of the second inner punch 72 and is adapted to be fitted into the cylindrical body hole 67 of the second die 66 and is able to snugly contain the second inner punch 72. A tapered rocking surface portion 75 is formed along the inner rim of the bottom of the second outer punch 74. The tapered rocking surface portion 75 has an outer surface angled so that the inner diameter of the tapered rocking surface portion 75 is gradually increased downward, at an angle corresponding to the slanted rocking surface 19 formed along the opening 15 of the body portion 14 of the first housing 11.

When forming the first housing 11 from the intermediate molding 46, the intermediate molding 46 is inserted into the cylindrical body hole 67 of the second die 66 with the small diameter cylindrical portion 45 as shown in Fig. 7. In that state, the slanted portion 44 of the intermediate molding 46 is caught against the inner rim of the step portion 68.

Thereafter, the second inner punch 72 is snugly inserted into the intermediate molding 46 fitted in the cylindrical body hole 67 of the second die 66 so that the end of the second inner punch 72 comes into contact with the upper part of the slanted portion 44 of the intermediate molding 46. By lowering the second inner punch 72 further, the slanted portion 44 becomes flattened against the step portion 68 of the second die 66.

The second inner punch 72 is lowered by a given distance or until a given load is applied. Thereafter, the second outer punch 74 containing the second inner punch 72 therein is lowered and fitted into the cylindrical body hole 67 of the second die 66, in other words the second outer punch 74 is snugly inserted between the cylindrical body hole 67 of the second die 66 and the second inner punch 72. Extrusion is conducted by pushing the intermediate molding 46 downward in this state by a specified distance or until a given load is applied. As a result of the extrusion, the first housing 11 shown in Fig. 1 (c) is formed with the tapered rocking surface portion 75 of the second outer punch 74 forming a slanted rocking surface 19 along the inner rim of the top of the first housing 11, with which the second outer punch 74 of the intermediate molding 46 is adapted to come into contact.

In other words, the cylindrical portion 43 of the intermediate molding 46 between the cylindrical body hole 67 of the second die 66 and the outer surface of the second inner punch 72 is formed into the body portion 14 of the first housing 11. The slanted portion 44 of the intermediate molding 46 flattened between the step portion 68 of the second die 66 and the end of the second inner punch 72 is formed into the bottom portion 17 of the first housing 11. The small diameter cylindrical portion 45 of the intermediate molding 46, which is fitted in the cylindrical coupling hole 69 of the second die 66 so that the cylindrical coupling hole 69 restrains the outer cylindrical surface of the intermediate molding 46, is formed into the coupling portion 23 that is in the state prior to formation of the external threaded portion 25 of the first housing 11. Thus, formation of the first housing 11 is completed. In order to reduced the diameter of the cylindrical material 41, the coupling portion 23 is not formed as a solid column, but, instead, it is formed in a hollow cylindrical shape having an axially extending through hole 24 at the center so that the coupling portion 23 communicates with the body portion 14 via the through hole 16 of the bottom portion 17.

The first housing 11 can be removed from the second extruder 65 by following a procedure of removing the second inner punch 72 from the body portion 14 of the first housing 11 by moving the second inner punch 72 upward without moving the second outer punch 74; moving the second outer punch 74 upward to remove it from the cylindrical body hole 67 of the second die 66; and, as shown in Fig. 8, moving the second knockout pin 70 upward so as to push the first housing 11 out of the second die 66.

Thereafter, the external threaded portion 25 is formed around the outer cylindrical surface of the coupling portion 23. Then, an air hole 27 that extends through the bottom portion 17 of the first housing 11 in the radial direction is formed so that the external threaded portion 25 communicates with the communicating hole 24. The first ball head portion 28 of the first ball stud 12 is placed in the housing 11 together with the bearing seat 13 that contains the first ball head portion 28. Thereafter, by tapering the portion where the opening 15 of the first housing 11 is located by crimping said portion inward, assembly of the first ball joint 4 is completed.

According to the embodiment described above, a first housing 11 having a coupling portion 23 projecting from the bottom portion 17 is formed by forging a cylindrical material 41 in such a manner that the diameter of one of the axial end portions of the cylindrical material 41 is reduced by squeezing. Therefore, compared with the conventional art that calls for forging a material in the shape of a solid column, a first housing 11 according to the present invention can easily be formed with substantially reduced pressure. Furthermore, it is easier to prevent flow of the surplus material by restraining the material so that the end where the opening 15 of the first housing 11 is located, i.e. the end opposite the portion that undergoes the squeezing, will not be extruded rearward. By forging the material while restraining it, a body portion 14 having a uniform depth is formed. Therefore, the embodiment is capable of easily forming a first housing 11 having precise dimensions, uniform quality and stable characteristics without the need of cutting or other finishing work of the vicinity of the opening 15 of the body portion 14 of the first housing 11.

According to the invention described above, the forging process calls for applying pressure to the material 41 in the axial direction so as to perform extrusion to taper the forward end with respect to the direction in which the pressure is applied. Because of forward extrusion with the base end restrained to prevent the surplus material from running out, a body portion 14 having a uniform depth can be formed easier than in case of a conventional method that calls for rearward extrusion of a material in the shape of a solid column. The invention enables the reliable formation of a body portion having precise dimensions and stable characteristics.

An intermediate molding 46 having a cylindrical portion 43, a slanted portion 44, which is located at one of the axial ends of the cylindrical portion 43 and has a gradually reduced diameter, and a small diameter cylindrical portion 45, which is located at the narrowing end of the slanted portion 44 in such a manner as to be coaxial with the cylindrical portion 43 and has a diameter smaller than that of the cylindrical portion 43, is produced from the material 41, and the resulting intermediate molding 46 is formed into a first housing 11 by forging. Thus, a bottom portion 17 having a cylindrical coupling portion 23 projecting from the bottom face thereof can easily be formed at one end of the body portion 14 without the possibility of underfill.

Forging of an intermediate molding 46 from the material 41 is performed by forward extrusion by using the first extruder 48 which is provided with the first die 50, the first inner punch 56 and the first outer punch 62 described above. By thus performing forging, it is possible to reliably restrain the base end of the material 41, i.e. the end corresponding to the opening 15 of the first housing 11, while restraining the inner cylindrical surface and the outer cylindrical surface of the material 41. Therefore, an intermediate molding 46 including a cylindrical portion 43 having a given length can easily be formed, and the resulting intermediate molding 46, which has precise dimensions and stable characteristics, enables the reliable formation of a first housing 11 having precise dimensions and stable characteristics.

A cylindrical material having an outer diameter and an inner diameter that correspond to the intended outer diameter and inner diameter of the body portion 14 of the first housing 11 is used as the material 41. By applying pressure to an end of such a material 41 in the axial direction while restraining the outer and inner cylindrical surfaces of the other end to taper the forward end with respect to the direction in which the pressure is applied, the material 41 undergoes forging process without the need of pressure to enlarge or narrow the base end with respect to the direction in which the pressure is applied. As the invention thus enables the reduction of the pressure necessary for the forging process of the material 41, the invention is capable of reducing the dimensions of the pressure device and making the housing more convenient to produce.

An air hole 27 that extends in the radial direction and passes through the center of the coupling portion 23 is bored through the bottom portion. As the air hole 27 communicates with the communicating hole 24 located on the center axis of the coupling portion 23, the end of the coupling portion 23 communicates with the exterior of the body portion 14 of the first housing 11 via the communicating hole 24 and the air hole 27. Therefore, for example, even in the state where the ball joint is integrally attached to the rack bar 3 as shown in Fig. 3, the interior of the rack bar 3 communicates with the exterior of the first housing 11 so that fluctuation in the pressure in the rack boot 35 can easily be absorbed.

Fluctuation in the internal pressure in the rack boot 35 and the rack bar 3 can be absorbed merely by providing an air hole 27. As there is no need of special work, such as forming an axially extending communicating hole 24 in the coupling portion 23, the invention offers improved manufacturability.

Although the invention is explained as above referring to the first ball joint 4 to be attached to the rack bar 3 of the rack-and-pinion steering system main body 1, the invention is applicable to a ball joint of any other type.

Furthermore, although the above explanation involves a material 41 having an outer diameter and an inner diameter that are nearly the same as the intended outer diameter and inner diameter of the body portion 14, a material 41 having a different shape may be used. For example, in case the outer diameter or the inner diameter of the material 41 is smaller than the outer diameter or the inner diameter of the body portion 14, an intermediate molding 46 having a cylindrical portion 43 that has an outer diameter and an inner diameter corresponding to those of the body portion may be formed by snugly inserting the first inner punch 56 of the first extruder 48 into the material 41 until reaching a given location so as to enlarge the material 41 and, thereafter, applying further pressure by the first outer punch 62. According to another example of applicable methods, a first housing 11 having a given shape may be formed by narrowing an end of a material so as to make the diameter of the material the same as the diameter of the material 41 described above, snugly inserting the second inner punch 72 of the second extruder 65 into the cylindrical portion 43 of the intermediate molding 46, which has been formed as above, in such a manner as to enlarge the intermediate molding 46 and, thereafter, applying further pressure by the second outer punch 74.

According to the embodiment described above, narrowing is performed by squeezing process using extrusion. However, narrowing may be done in any other way; for example, it may be done by rolling a roller around the outer cylindrical surface of the target portion.

Furthermore, it is not essential to provide an air hole 27.

Explanation has been given referring to the first housing 11 having a coupling portion 23 which is provided with a communicating hole 24. However, depending on the dimensions of the material 41 or the shape of the first housing 11 to be formed, the invention is also applicable to cases where no communicating hole 24 is provided so that the coupling portion 23 of the first housing 11 is closed off.

According to the embodiment described above, the formation process is performed by using a first extruder 48 and a second extruder 65. However, it may be performed in other way; for example, in case the diameter of the material 41 is smaller than that of the body portion 14 as shown in Fig. 9 (a), an intermediate molding 46 is formed by using the first extruder 48 as shown in Fig. 9 (b). Then, as shown in Fig. 9 (c), a second intermediate molding 77 is formed by enlarging the intermediate molding 46 until its diameter corresponds to the diameter of the body portion. Thereafter, as shown in Fig. 9 (d), the first housing 11 is formed from the second intermediate molding 77 by using the second extruder 65.

Furthermore, although the slanted rocking surface 19 of the opening 15 is formed by pressure applied by the second outer punch 74 of the second extruder 65, the slanted rocking surface 19 may be formed on the intermediate molding 46 beforehand as shown in Fig. 9 by applying pressure by the first outer punch 62, which has a tapered rocking surface portion 75, of the first extruder 48. In case the formation of a housing involves enlarging the material 41, a structure which calls for providing the intermediate molding 46 with a slanted rocking surface 19 beforehand as described above makes it easier and smoother to insert the first inner punch 56 in such a manner as to enlarge the material 41. Therefore, it is effective in improving the manufacturability of the housing and also reducing damage to the first inner punch 56.

When forming a first housing 11 from an intermediate molding 46 shown in Fig. 7, forging may be performed while preventing the surplus material of the small diameter cylindrical portion 45 from running out by means of the upper end of the second knockout pin 70 as shown in Fig. 10.

The tapered rocking surface portion 75 formed at the bottom of the second outer punch 74, which is used to forge the first housing 11 while preventing the material around the opening 15 of the first housing 11 from running out, may have any shape, such as those shown in Fig. 11 or Fig. 12.

### POSSIBLE INDUSTRIAL APPLICATION

As described above, a method of producing a housing of a ball joint according to the present invention is used for producing a ball joint, examples of which include a rack-end ball joint attached to the end of a generally bar-shaped rack bar connected to a gear box of the main body of a rack-and-pinion steering system which constitute, for example, the steering mechanism of an automobile.

## Claims

1. A method of producing a housing of a ball joint, said housing including a body portion having a cylindrical shape, a bottom portion that closes off an end of the body portion, a coupling portion formed on the bottom face of the bottom portion and projecting therefrom in the direction facing away from the body portion, and an inner chamber for containing the ball head portion of the ball joint with a bearing seat disposed between the inner chamber and the ball head portion so that the ball head portion can easily slide on the bearing seat, wherein:
said coupling portion is formed by narrowing the portion near one of the two axial ends of a cylindrical material by forging.

2. A method of producing a housing of a ball joint as claimed in claim 1, wherein said method calls for narrowing the portion near one of the two axial ends of the material while restraining the other axial end of the material so as to maintain the shape of the body portion.

3. A method of producing a housing of a ball joint as claimed in claim 1 or claim 2, wherein said method calls for narrowing the portion which is near one of the two axial ends of the material and at a given distance from the other axial end of the material, while restraining the other axial end of the material so as to prevent the surplus material from running out.

4. A method of producing a housing of a ball joint, said housing including a body portion having a cylindrical shape, a bottom portion that closes off an end of the body portion, a coupling portion formed on the bottom face of the bottom portion and projecting therefrom in the direction facing away from the body portion, and an inner chamber for containing the ball head portion of the ball joint with a bearing seat disposed between the inner chamber and the ball head portion so that the ball head portion can easily slide on the bearing seat, wherein:
the portion near one of the two axial ends of said material by is narrowed by forging so as to form an intermediate molding having a cylindrical portion in the shape of a cylinder, a slanted portion, which is located at one of the axial ends of the cylindrical portion and has a gradually reduced diameter, and a small diameter cylindrical portion which is formed coaxially with the cylindrical portion and has a diameter smaller than that of the cylindrical portion; and wherein
said body portion, bottom portion and coupling portion are respectively formed from the cylindrical portion, the slanted portion and the small diameter cylindrical portion of said intermediate molding by conducting forging in the state where the outer and inner cylindrical surfaces of the cylindrical portion of the intermediate molding, the surface of the other end of the cylindrical portion, i.e. the end opposite the end where the slanted portion is located, and the outer cylindrical surface of the small diameter cylindrical portion are restrained.

5. A method of producing a housing of a ball joint as claimed in any one of the claims from claim 1 to claim 4, wherein said method calls for applying pressure to the material in the axial direction so as to perform extrusion to reduce the diameter of the forward end of the material with respect to the direction in which the pressure is applied.

6. A method of producing a housing of a ball joint, said housing including a body portion having a cylindrical shape, a bottom portion that closes off an end of the body portion, a coupling portion formed on the bottom face of the bottom portion and projecting therefrom in the direction facing away from the body portion, and an inner chamber for containing the ball head portion of the ball joint with a bearing seat disposed between the inner chamber and the ball head portion so that the ball head portion can easily slide on the bearing seat, wherein:
an intermediate molding having a cylindrical portion in the shape of a cylinder, a slanted portion, which is located at one of the axial ends of the cylindrical portion and has a gradually reduced diameter, and a small diameter cylindrical portion which is formed coaxially with the cylindrical portion and has a diameter smaller than that of the cylindrical portion is formed by using a processing machine which includes:
a die whose inner surface is formed into a cylindrical hole, a tapered surface and a smaller cylindrical hole, said tapered surface extending from the bottom of the cylindrical hole as an integral body therewith and angled downward so that its diameter is gradually reduced, and said smaller cylindrical hole integrally extending from the lower end of the tapered surface in such a manner as to be coaxial with the cylindrical hole and having a diameter smaller than that of the cylindrical hole,
an inner punch adapted to be inserted into or removed from the interior of said die and provided with a cylindrical shaft whose outer diameter is smaller than the diameter of said cylindrical hole, a slanted surface portion whose outer surface integrally extends from the lower end of the cylindrical shaft and gradually narrows downward, and a smaller cylindrical shaft which is coaxial with the aforementioned cylindrical shaft and has a diameter smaller than that of the cylindrical shaft, and
an outer punch adapted to be fitted into said cylindrical hole and snugly contain the cylindrical shaft of the inner punch;
said intermediate molding is formed by following a procedure of:
snugly inserting a cylindrical material into said cylindrical hole of the die,
snugly inserting the inner punch into the material fitted in the cylindrical hole of the die until the inner punch reaches the location at which the outer cylindrical surface of said slanted surface portion faces the tapered surface while the outer cylindrical surface of the smaller cylindrical shaft faces the smaller cylindrical hole so that the outer and inner cylindrical surfaces of said material are restrained by the die and the inner punch, and
snugly inserting said outer punch into the cylindrical hole of the die that restrains the material, thereby applying pressure to the material in the axial direction so that the diameter of the forward end of the material with respect to the direction in which the pressure is applied is reduced by extruding said forward end portion from between the slanted surface portion and the tapered surface into the space between the smaller cylindrical shaft and the cylindrical hole; and wherein
said housing is formed by forging the intermediate molding formed as above.

7. A method of producing a housing of a ball joint as claimed in claim 6, wherein:
the processing machine has a molding apparatus that includes:
a lower die provided with:
a cylindrical coupling hole having an inner diameter corresponding to the outer diameter of the coupling portion and
a cylindrical body hole which extends from the upper rim of the cylindrical coupling hole integrally and concentrically with the cylindrical coupling hole, with a step portion formed between the cylindrical body hole and the cylindrical coupling hole, and has an inner diameter greater than the diameter of the cylindrical coupling hole and corresponding to the outer diameter of said body portion,
a push-punch having an outer diameter corresponding to the inner diameter of the body portion and the forward end of the push-punch corresponding to the upper surface of the bottom portion, and
a pressure-punch having a cylindrical shape and adapted to be fitted into the cylindrical body hole and snugly contain said push-punch; and wherein
said body portion, bottom portion and coupling portion are respectively formed from said cylindrical portion, slanted portion and small diameter cylindrical portion by following a procedure of:
inserting the small diameter cylindrical portion of the intermediate molding into the cylindrical coupling hole of the lower die while inserting the cylindrical portion into the cylindrical body hole so as to fit the intermediate molding in the lower die, and
snugly inserting said push-punch into the cylindrical portion of the intermediate molding fitted in the lower die so as to push the slanted portion of the intermediate molding against the step portion, and pushing the upper rim of said cylindrical portion by means of the pressure-punch.

8. A method of producing a housing of a ball joint as claimed in any one of the claims from claim 1 to claim 7, wherein the outer diameter and the inner diameter of the material are nearly the same as the respective outer diameter and inner diameter of the body portion.

9. A method of producing a housing of a ball joint as claimed in any one of the claims from claim 1 to claim 8, wherein said method calls for providing either the bottom portion or the coupling portion with an air hole that extends from the center to the outer cylindrical surface of the housing.
